# EUROPEAN PATENT SPECIFICATION

(11) **EP 1 840 202 B1**
(45) Date of publication and mention of the grant of the patent: **22.05.2013**
(21) Application number: 05816619.0
(22) Date of filing: 16.12.2005
(51) Int. Cl.: C12G 3/02, C12C 5/04, C12C 5/02

(54) **METHOD OF PRODUCING A FERMENTED ALCOHOLIC BEVERAGE EXCELLENT IN COLOR LEVEL AND FLAVOR**
VERFAHREN ZUR HERSTELLUNG EINES VERGORENEN ALKOHOLISCHEN GETRÄNKS MIT AUSGEZEICHNETEM FARBNIVEAU UND GESCHMACK
MÉTHODE DE PRODUCTION D'UNE BOISSON ALCOOLISÉE FERMENTÉE PRÉSENTANT D'EXCELLENTES PROPRIÉTÉS DE COLORATION ET DE GOÛT

(30) Priority: 16.12.2004 JP 2004364837; 07.02.2005 JP 2005031154
(43) Date of publication of application: 03.10.2007
(73) Proprietor: KIRIN BEER KABUSHIKI KAISHA, Tokyo 104-8288 (JP)
(72) Inventor: OTA, Takehito, Tokyo 1048288 (JP); SASAKI, Nobuyoshi, Tokyo 1048288 (JP)
(74) Representative: HOFFMANN EITLE
(86) International application number: PCT/JP2005/023178
(87) International publication number: WO 2006/064919

(56) References cited:
- EP-A2- 0 924 294
- WO-A1-02/04593
- JP-A- 9 037 758
- JP-A- 10 191 954
- JP-A- 2001 037 462
- JP-A- 2004 024 151
- US-A- 4 929 452
- US-A1- 2004 005 381

## Description

### FIELD OF THE INVENTION

The present disclosure relates to a fermented alcoholic beverage excellent in color of the liquid and in flavor. The present invention relates to a method for producing the fermented alcoholic beverage in which Maillard reaction products of sugar and proteolytic products are used to adjust the color level (color of the liquid) and flavor of the fermented alcoholic beverage in a method for producing a fermented alcoholic beverage using brewer's yeast.

### BACKGROUND OF THE INVENTION

Beer and low-malt beer, which are fermented alcoholic beverages, are produced with: malt as the main ingredient; a starchy ingredient such as rice, wheat, corn, or starch as a secondary ingredient; and hops and water as further ingredients. Under the Japanese Liquor Tax Law, there are provisions for three types of beer, where, excluding water, the amount of malt used is not less than 50% by weight and less than 66.7% by weight; not less than 25% by weight and less than 50% by weight; and less than 25% by weight.

Under the Japanese Liquor Tax Law, low-malt beer belongs to a class of miscellaneous liquors that use wheat or malt as part of its ingredients, but both beer and low-malt beer have in common the use of active enzymes of malt or purified enzymes derived from molds or the like to saccharify malt or starchy component used as secondary ingredient, with this saccharified liquid fermented and broken down into alcohol and carbon dioxide gas to make an alcoholic beverage. Therefore, the method for making beer and the method for making low-malt beer do not differ greatly in their fundamentals.

On the other hand, "miscellaneous liquors" that have sparkling characteristics are classified under the Japanese Liquor Tax Law into the "low-malt beer" described above that uses wheat or malt as part of its ingredients and "other miscellaneous liquors" aside from low-malt beer. Here, the "other miscellaneous liquors" are ones that do not use wheat or malt but in which vegetable proteins and the like such as pulses or grains are broken down with enzymes to obtain required nitrogen sources and saccharified liquid is added to carry out fermentation. Therefore, there are also fundamentally no great differences in the way the "other miscellaneous liquors" are made from the way beer or low-malt beer is made, and it is possible to make them using the production equipment for beer or low-malt beer.

In recent years, various ingredients and various additives have been used in fermented alcoholic beverages such as beer, low-malt beer and other miscellaneous liquors for such purposes as increasing the variations in flavor, and methods for producing fermented alcoholic beverages having a variety of tastes and flavors have been disclosed. For beverages that use ingredients other than malt, for example, a method is disclosed in which wort is prepared from glucose syrup based on starch obtained from wheat, potatoes, corn, sorghum, barley, rice, or tapioca, and from soluble proteins, water, and hops. This wort is fermented to produce beer-type beverages (Published Unexamined Patent Application No. 2001-37462). A method for producing low-alcohol fermented beverages with grains such as rice, wheat, barnyard grass, or millet as the ingredients has also been disclosed (Published Unexamined Patent Application No. 2001-37463).

In all methods for producing these fermented alcoholic beverages, techniques are adopted in which the ingredients are mixed to prepare a pre-fermentation solution and this pre-fermentation solution is heated and boiled to deactivate the enzymes and adjust the color level, after which brewer's yeast is used to carry out fermentation. In the production of beer among fermented alcoholic beverages that are fermented using brewer's yeast, the color level (color of the liquid) is imparted mainly by the pigment of the malt, and adjustment of the color level (color of the liquid) of the fermented alcoholic beverage is attempted by adding a pigment as necessary. However, with low-malt beer and other miscellaneous liquors, a decrease in the color level of the final product based on restrictions on the use of the ingredients cannot be avoided because either the proportion of malt used is low or there is a restriction on the proportion of wheat or malt that may be used, and the color level (color of the liquid) of the fermented alcoholic beverage is adjusted, among others, by adding pigments such as caramel coloring.

For example, Published Unexamined Patent Application No. 2001-37462 discloses a method for producing a beer-type beverage in which no malt is used. A wort is prepared using soluble protein ingredients prepared from glucose syrup, wheat protein or the like, and caramel is used to impart its color level. In addition, Published Unexamined Patent Application No. 2004-24151 discloses a method for producing a beverage with a beer taste without using malt as an ingredient, by using wheat starch ingredients such as barley and wheat. Caramel, safflower coloring or caramel and safflower coloring is added to adjust the color level.
EP 0 924 294 A2 discloses a method of stabilizing the flavor of a fermented malt beverage comprising contacting said beverage with a flavor-stabilizing amount of one or more reductase enzymes, wherein said reductase enzyme is not oxoaldehyde reductase enzyme.

Furthermore, WO 2004/000990 A1 discloses a method for producing a sparkling beer-like alcoholic beverage without using any barley, wheat, or malt, and using a syrup containing a carbon source obtained from corn, potatoes, green peas, soybeans or rice and a nitrogen source obtained from corn, potatoes, green peas, soybeans or rice. Coloring is added to give this alcoholic beverage its color level, and cited among various colorings are caramel coloring, safflower coloring, gardenia coloring, kaoliang coloring, cochineal coloring, carrot coloring, paprika coloring, red cabbage coloring, grape coloring, purple corn coloring, elderberry coloring, beet coloring, ang-kahk coloring, turmeric coloring, and other natural colorings, or synthetic coloring such as red dye 102 for food, red dye 104 for food and orange dye 201. However, in the methods in which these colorings are added, the tendency toward alcoholic beverages with unnatural colors or tastes differing from beer remains. With the restrictions on the use of wheat and malt ingredients, there is a lack of the taste and feeling of body that exist in beer, and the tendency toward a feeling of something missing was strong.

The Maillard reaction is known as a reaction between the sugars and free amino acids contained in food products and the like, when high temperatures are applied as in cooking, roasting, or baking, as when preparing or manufacturing the food products and the like. The Maillard reaction products that are produced by the reaction impart color and aroma to the food products and the like. The Maillard reaction products are known for being used to give flavor to food products and the like by taking advantage of the characteristics of these reaction products (Published Translation of PCT (WO) No. 2004-511241). Their use as an antioxidant utilized in food products and the like is known as a special application (Published Unexamined Patent Application No. S56-166286). However, direct use of these reaction products to actively impart flavor and color to fermented alcoholic beverages is not known.

Patent Reference 1: Published Unexamined Patent Application No. S56-166286
Patent Reference 2: Published Unexamined Patent Application No. 2001-37462
Patent Reference 3: Published Unexamined Patent Application No. 2001-37463
Patent Reference 4: Published Unexamined Patent Application No. 2004-24151
Patent Reference 5: Published Translation of PCT (WO) No. 2004-511241
Patent Reference 6: WO 2004/00990 A1

### DISCLOSURE OF THE INVENTION

### [Problems to be Solved by the Invention]

The problem for the present invention is, in a fermented alcoholic beverage that uses brewer's yeast and a method for producing the same, to provide a fermented alcoholic beverage that is given a beer-like, natural color level and flavor. In particular, the problem is to provide a fermented alcoholic beverage that is given a beer-like, natural color level and flavor and a method for producing the same in low-malt beer and other miscellaneous liquors that require enhancement in the color level and flavor of the fermented alcoholic beverages because of restrictions on the use of fermentation ingredients.

### [Means to Solve the Problems]

Conventionally, in fermented alcoholic beverages that use brewer's yeast, and more specifically, in fermented alcoholic beverages such as low-malt beer and other miscellaneous liquors, artificial colors such as caramel are added to enhance the color level and flavor of these fermented alcoholic beverages. However, in methods in which these artificial colors (pigments) are added to alcoholic beverages, the tendency toward alcoholic beverages with unnatural colors or flavors differing from beer remains, and there was a problem in that it was difficult to produce fermented alcoholic beverages that were given a beer-like, natural color level and flavor.

The invention is concerned with the adjustment of color level and flavor of fermented alcoholic beverages in the production of fermented alcoholic beverages using brewer's yeast. More specifically, the invention is concerned with adjusting the color level and flavor of low-malt beer and other miscellaneous liquors that require enhancement in the color level and flavor of fermented alcoholic beverages because of restrictions on the use of fermentation ingredients, such as the use of malt and grains. The present inventors, in specific investigations into methods for producing fermented alcoholic beverages that are given beer-like, natural color levels and flavors, have discovered that fermented alcoholic beverages having beer-like, natural color levels and flavors can be produced without using artificial colors such as caramel, which has been used conventionally. According to the invention, the color of the liquid and flavor of the fermented alcoholic beverage can be adjusted by using Maillard reaction products of sugar and proteolytic products and preparations of the same.

In the present invention, for the sugar and proteolytic products used in preparing Maillard reaction products, decomposition products of the starches that are used as ingredients in the production of fermented alcoholic beverages using brewer's yeast can be used as the sugar and decomposition products of proteins can be used as the proteolytic products. In addition, for the purpose of achieving a balance between the flavor imparted by the addition of Maillard reaction products and the flavor of the fermented alcoholic beverage imparted by the proteins used as ingredients, decomposition products of the protein ingredients that are used as nitrogen sources in the production of that fermented alcoholic beverage may be used as the proteolytic products used in preparing the Maillard reaction products in the present invention. In the present invention, decomposition products of soybean protein may be cited as particularly preferable proteolytic products for the proteolytic products used in preparing the Maillard reaction products.

In the present invention, the Maillard reaction products may be prepared by reacting sugar and proteolytic products at a reaction temperature of not less than 105°C and not more than 121°C. In addition, preparations in which the Maillard reaction products are prepared in advance and formed into products by drying, powdering and the like may be used in the present invention. In the processes for producing the fermented alcoholic beverage of the present invention, the Maillard reaction products are added before the fermentation process in the process for producing the fermented alcoholic beverage. Alternatively, a process for producing the Maillard reaction products with the sugar and proteolytic products using a reaction temperature of not less than 105°C and not more than 121°C may be inserted before the fermentation process in the production process of the fermented alcoholic beverage.

Thus, the present invention specifically comprises: (1) a method for producing a fermented alcoholic beverage that uses brewer's yeast, wherein Maillard reaction products of sugar and proteolytic products or preparations of the same are used to adjust the liquid color and flavor of the fermented alcoholic beverage; (2) the method for producing a fermented alcoholic beverage described in (1) above, wherein the proteolytic products are decomposition products of the proteins that are used as nitrogen ingredients in producing the fermented alcoholic beverage; (3) the method for producing a fermented alcoholic beverage described in (1) or (2) above, wherein the proteolytic products are soybean proteolytic products; (4) the method for producing a fermented alcoholic beverage described in any of (1) - (3) above, wherein the reaction temperature for the Maillard reaction between sugar and the proteolytic products is not less than 105°C and not greater than 121°C; (5) the method for producing a fermented alcoholic beverage described in any of (1) - (4) above, wherein the Maillard reaction products of the sugar and proteolytic products are added before the fermentation process in the process for producing the fermented alcoholic beverage; (6) the method for producing a fermented alcoholic beverage described in any of (1) - (4) above, wherein a process for producing Maillard reaction products from the sugar and proteolytic products in the ingredients using a reaction temperature of not less than 105°C and not more than 121°C is inserted before the fermentation process in the process for producing the fermented alcoholic beverage; and (7) the method for producing a fermented alcoholic beverage described in any of (1) - (6) above, wherein the fermented alcoholic beverage is a low-malt beer or other miscellaneous liquor.

In addition, the present invention includes (8) a fermented alcoholic beverage excellent in liquid color and flavor produced by the fermented alcoholic beverage production method described in any of (1) - (7) above.

### [Best Mode for Carrying Out the Invention]

The present invention concerns adjusting the liquid color and flavor of a fermented alcoholic beverage using the Maillard reaction products of sugar and proteolytic products or a preparation of the same in a method for producing a fermented alcoholic beverage that uses brewer's yeast. The Maillard reaction products are a brown liquid obtained by mixing and heating proteolytic products such as amino acids and sugar, and have an aroma that is imparted by the thermal reaction of proteolytic products such as amino acids and sugar.

Of the ingredients used for the Maillard reaction products, the sugar has no limitations as long as it contains sugars such as crystallized glucose, starch syrup, or other liquid sugar syrups, or saccharified liquid of malt, wheat, rice, or other vegetable starches and the like, but liquid sugar syrups are preferable from the standpoint of being easy to handle and making the reaction efficient. In addition, since the sugar hydroxyl groups having the capacity to form glycosides are what contribute to the Maillard reaction, it is more preferable to use liquid sugar syrups primarily of monosaccharides.

In addition, of the ingredients that undergo the Maillard reaction, decomposition products of the proteins contained in grains, legumes, corn, potatoes, rice and the like by protease or peptidase may be used for the proteolytic products. Industrially purified amino acids or mixtures thereof may be used as well. From the standpoint of cost and flavor, the former (the decomposition products), which are used as the ingredients for producing fermented alcoholic beverages that use brewer's yeast, are preferable. Furthermore, among the former, decomposition products of soybean proteins may be cited as more preferable proteolytic products. In addition, for the purpose of achieving a balance between the flavor imparted by the addition of Maillard reaction products and the flavor of the fermented alcoholic beverage imparted by the proteins used as ingredients, decomposition products of the protein ingredients that are used as nitrogen sources in producing the fermented alcoholic beverage may be used as the proteolytic products in preparing the Maillard reaction products in the present invention. In the present invention commercial enzymes may be used as the enzymes for breaking down the proteins in preparing the proteolytic products. For example, any of protease A Amano G, protease P Amano G, peptidase R (Amano Enzyme Inc.) or the like may be used as the enzyme, and these enzymes may be combined as well.

In the present invention, it is preferable for the reaction temperature used in preparing the Maillard reaction products to be high from the standpoint of reducing the reaction time, but if it is excessively high, the sugar itself will undergo a caramelization reaction, and the target color tone or flavor will not be obtained. Therefore, it is preferable that a temperature of 105 - 121°C be adopted. In the method for producing the fermented alcoholic beverage of the present invention, the timing for adding the Maillard reaction products is not limited in particular, but to make the sugar and amino acids remaining in the Maillard reaction products be consumed by the yeast, it is preferable for them to be added at a stage before fermentation. In other words, in the present invention, the Maillard reaction products are prepared in advance and added before the fermentation process in the process for producing the fermented alcoholic beverage. Alternatively, this may be done by inserting a Maillard reaction using a reaction temperature of not less than 105°C and not more than 121°C, to produce the Maillard reaction products of the sugars and proteolytic products contained in the ingredients before the fermentation process in the process for producing the fermented alcoholic beverage.

When a fermented alcoholic beverage is produced using the production method of the present invention, the liquid color and flavor of the fermented alcoholic beverage may be adjusted by using, as an index or indices, any one or more of the color level, the furfural component, the methional component, or the phenylacetaldehyde component of the Maillard reaction products or the preparation of the same. When the liquid color and flavor of the fermented alcoholic beverage are adjusted using any one or more of the color level, the furfural component, the methional component, or the phenylacetaldehyde component of the Maillard reaction products or the preparation of the same as an index or indices for the adjustment of the liquid color and flavor of the fermented alcoholic beverage, it is preferable for the numerical values of the color level described above or of the concentrations of the various components described above to be: 12EBC or greater for said color level; 300 ppb or greater for said furfural component concentration; 50 ppb or greater for said methional component concentration; or 200 ppb or greater for said phenylacetaldehyde component concentration.

In other words, it is sufficient for the color level or the concentration of aldehydes (furfural, methional, and phenylacetaldehyde) of the Maillard reaction products, using which it is possible to adjust the liquid color and flavor of the fermented alcoholic beverage effectively and efficiently, to be at least twice as much or more as in the case of normal reaction products such as obtained at a retention temperature of 100°C (under normal pressure). Specifically, it is sufficient as described above for the color level to be 12EBC or greater, the furfural component concentration to be 300 ppb or greater, the methional component concentration to be 50 ppb or greater, or the phenylacetaldehyde component concentration to be 200 ppb or greater. It is more preferable for them to be four times or more than those of the normal reaction products, that is, it is sufficient for the color level to be 23EBC or greater, the furfural component concentration to be 600 ppb or greater, the methional component concentration to be 100 ppb or greater, or the phenylacetaldehyde component concentration to be 400 ppb or greater. It is even more preferable for the color level to be 39EBC or greater, the furfural component concentration to be 900 ppb or greater, the methional component concentration to be 200 ppb or greater, or the phenylacetaldehyde component concentration to be 700 ppb or greater.

In the present invention, a pressurized heating device may be used as the device for preparing the Maillard reaction products. For the method for producing the fermented alcoholic beverage of the present invention, the production equipment normally used in producing beer or the like may be used, and for the production conditions such as the conditions for preparing, processing, and fermenting wort or pre-fermentation solution, the conditions normally used in producing these fermented alcoholic beverages may basically be used.

Further specific descriptions of the present invention will be given in the following embodiments, but the scope of the present invention is not limited to these examples.

### [Embodiment 1]

### (Method for producing Maillard reaction products)

A suspension of 3 g of soybean protein in 100 ml of 45°C water was formed, 0.06 g of commercial peptidase was added, and a proteolytic liquid was obtained by agitating for approximately 3 hours. Protease P Amano G (Amano Enzyme Inc.) was used for the protease. To this was added 25 g or 50 g of commercial maltose syrup (DE47, 75% solids), glucose syrup (75% solids), or fructose syrup (75% solids) and heating was carried out in a sealed vessel; from the point where it reached 100°C, 115°C or 120°C, it was maintained for 30 minutes or 60 minutes and then removed at that point, and the Maillard reaction products were obtained.

The Maillard reaction conditions in this embodiment, an analysis of the Maillard reaction products obtained, and results of sensory evaluations (by six people) are given in Table 1. "Caramel sense" here is primarily an olfactory characteristic, and it expresses a burned flavor that is accompanied by sweetness, which is sensed strongly in beer in which caramel malt is used.
The GC-MS described in AGRICULTURAL and FOOD CHEMISTRY 2003, 51 6941 - 6944 was used to analyze the aldehydes in the Maillard reaction products or the preparations of the same, that is, to analyze and find the individual concentrations of the furfural component, the methional component, and the phenylacetaldehyde component in the Maillard reaction products or the preparations of the same.

**Table 1**

| | 1 | 2 | 3 | 4 | 5 | 6 | 7 |
|---|---|---|---|---|---|---|---|
| Syrup type | Maltose | | | | | Glucose | Fructose |
| Amount of syrup (g) | 50 | 50 | 50 | 25 | 25 | 25 | 25 |
| Retention temperature (°C) | 100 | 115 | 120 | 120 | 120 | 120 | 120 |
| Retention time (minutes) | 60 | 60 | 60 | 60 | 30 | 30 | 30 |
| Color level (EBC) | 5.8 | 39.5 | 55.8 | 51.5 | 23.8 | 57.4 | 55.7 |
| Furfural (ppb) | 152 | 903 | 2112 | 1203 | 412 | 1090 | 845 |
| Methional (ppb) | 25 | 212 | 512 | 278 | 124 | 1056 | 582 |
| Phenylacetaldehyde (ppb) | 102 | 793 | 1817 | 1289 | 645 | 1587 | 1542 |
| Caramel sense | None | Medi um | Strong | Med ium | Weak | Strong | Strong |

Under the conditions of this embodiment (the same proteolytic liquid, 120°C or less), the aldehydes that are believed to be products of the Maillard reaction (furfural, methional, and phenylacetaldehyde) correlated substantially with the color level. When these analytic values were viewed as an index of the strength of the Maillard reaction, it was found that the effect of temperature on the Maillard reaction strength was large and that the reaction rate was extremely slow at 100°C compared with at 120°C. Stronger Maillard reaction products were obtained when glucose and fructose syrups, which have monosaccharides as the main components, were used than with maltose syrup, which has disaccharides or higher saccharides as the main components. On the other hand, as a result of sensory evaluations with the caramel sense, which is one of the aromas sensed specifically in Maillard reaction products, as the index, the results were that the flavor obtained by the Maillard reaction was substantially proportional to the color level and the aldehydes, namely, furfural, methional, and phenylacetaldehyde. Therefore, under these conditions, it was made clear that there was no problem in evaluating the strength of the Maillard reaction products with the color level or these aldehydes as an index.

### [Embodiment 2]

### (Example of producing fermented alcoholic beverage)

In this embodiment, a miscellaneous liquor that does not use wheat or malt is produced. A 2 kL scale test facility was used for the facility where this was carried out.
Ten kg of soybean protein was put into 330 liters of hot water, and protein breakdown was carried out using commercial peptidase. Protease P Amano G (Amano Enzyme Inc.) was used for the protease. Two hundred kg of a commercial maltose syrup (DE47, 75% solids) was added to the proteolytic liquid obtained, the solution was heated in a sealed vessel and maintained for 60 minutes after it reached 120°C, and a Maillard reaction liquid was obtained. Next, the Maillard reaction products described above were added to hot water containing 200 kg of maltose syrup, the sugar concentration was adjusted to approximately 13°P, and hops were added; after boiling for approximately 1 hour, it was cooled to approximately 10°C, yeast was added, and fermentation was carried out. After approximately 1 week of fermentation and several weeks of aging, the alcohol was adjusted to 5.5% v/v%, and a fermented alcoholic beverage was obtained. On the other hand, 400 kg of maltose syrup and 1.6 kg of caramel color were added to the same proteolytic liquid, the solution was adjusted to approximately 13°P, hops were added, boiling was carried out for approximately 1 hour, and a control product that did not use Maillard reaction products was obtained by carrying out the same operations as described above thereafter.

The results of the analysis of the fermented alcoholic beverage and the control product obtained are given in Table 2, and the results of the sensory evaluations (by six people) are given in Table 3. It was found that by using the Maillard reaction products of the present invention effectively and efficiently, it was possible to achieve a liquid color and flavor that were the same as those of normal beer and low-malt beer, which could not be achieved by using colorings such as caramel. In other words, it was found that the fermented alcoholic beverage produced by the method according to the present invention had a color level of 5 - 15 EBC, and the furfural component adjustable within the range of 13 - 18 ppb, the methional component within 1.0 - 2.2 ppb, and the phenylacetaldehyde component within 10 - 16 ppb, respectively. The "caramel sense" in Table 3 is primarily an olfactory characteristic, and it expresses a burned flavor that is accompanied by sweetness, which is sensed strongly in beer in which caramel malt is used. As can be seen from the results in the tables below, fermented alcoholic beverages brewed without using wheat or malt lack flavor and a feeling of body as they are and come out to taste thin, but by using the Maillard reaction products, the caramel sense (the flavor sensed when caramel malt is used) and sweetness were increased, and a product that was mild and had a feeling of body was successfully produced. In addition, the appearance was also characterized by brightness and a good color tone when compared with those colored by caramel color. These characteristics were close in their tendency to beer in which 70% of the total ingredients used is malt, and the characteristics were natural with no peculiar smell as well.

**Table 2**

| | Test | Control | Beer |
|---|---|---|---|
| Color level (EBC) | 8.9 | 8.2 | 7.5 |
| Furfural (ppb) | 16.33 | 10.53 | 16.02 |
| Methional (ppb) | 1.49 | 0.52 | 2.04 |
| Phenylacetaldehyde (ppb) | 12.78 | 3.93 | 13.13 |

**Table 3**

| | Test | Control | Beer |
|---|---|---|---|
| Appearance | Bright golden yellow with a touch of somewhat red color | No brightness and somewhat darkened | Bright golden yellow with brightness |
| Maltiness | Has a flavor that is close | None | Plenty |
| Caramel sense | 4 | 1 | 3 |
| Sweetness | 4 | 1 | 3 |
| Mildness | 4 | 2 | 4 |
| Feeling of body | 3 | 2 | 5 |

### [Industrial Applicability]

According to the method for producing a fermented alcoholic beverage of the present invention that uses Maillard reaction products, it is possible to produce a fermented alcoholic beverage that is imparted a beer-like, natural color level and flavor even in producing fermented alcoholic beverages such as low-malt beer and other miscellaneous liquors that require enhancement of the color level and flavor of the fermented alcoholic beverage because of restrictions on the use of fermentation ingredients such as the use of malt and grains. It is possible to produce a fermented alcoholic beverage excellent in liquid color and flavor and having the flavor and feeling of body that exist in beer.

## Claims

1. A method for producing a fermented alcoholic beverage that uses brewer's yeast, wherein Maillard reaction products of sugar and proteolytic products or preparations of the same are used to adjust the liquid color and flavor of the fermented alcoholic beverage.

2. The method for producing a fermented alcoholic beverage described in claim 1, wherein the proteolytic products are decomposition products of the proteins that are used as nitrogen ingredients in producing the fermented alcoholic beverage.

3. The method for producing a fermented alcoholic beverage described in claim 1 or 2, wherein the proteolytic products are soybean proteolytic products.

4. The method for producing a fermented alcoholic beverage described in any of claims 1-3, wherein the reaction temperature for the Maillard reaction between sugar and the proteolytic products is not less than 105°C and not greater than 121°C.

5. The method for producing a fermented alcoholic beverage described in any of claims 1-4, wherein the Maillard reaction products of the sugar and proteolytic products are added before the fermentation process in the process for producing the fermented alcoholic beverage.

6. The method for producing a fermented alcoholic beverage described in any of claims 1-4, wherein a process for producing Maillard reaction products from the sugar and proteolytic products in the ingredients using a reaction temperature of not less than 105°C and not more than 121°C is inserted before the fermentation process in the process for producing the fermented alcoholic beverage.

7. The method for producing a fermented alcoholic beverage described in any of claims 1 - 6, wherein the fermented alcoholic beverage is a low-malt beer or other miscellaneous liquor.

## Patentansprüche

1. Verfahren zur Herstellung eines fermentierten alkoholischen Getränks, welches Bierhefe einsetzt, wobei Maillard-Reaktionsprodukte aus Zucker und proteolytischen Produkten oder Zubereitungen derselben eingesetzt werden, um die flüssige Farbe und den Geschmack des fermentierten alkoholischen Getränks einzustellen.

2. Verfahren zur Herstellung eines fermentierten alkoholischen Getränks gemäß Anspruch 1, wobei die proteolytischen Produkte Abbauprodukte von Proteinen sind, die als Stickstoffbestandteile bei der Herstellung des fermentierten alkoholischen Getränks eingesetzt werden.

3. Verfahren zur Herstellung eines fermentierten alkoholischen Getränks gemäß Anspruch 1 oder 2, wobei die proteolytischen Produkte Sojaproteolysate sind.

4. Verfahren zur Herstellung eines fermentierten alkoholischen Getränks gemäß einem der Ansprüche 1 bis 3, wobei die Reaktionstemperatur für die Maillard-Reaktion zwischen Zucker und den proteolytischen Produkten nicht weniger als 105°C und nicht mehr als 121°C beträgt.

5. Verfahren zur Herstellung eines fermentierten alkoholischen Getränks gemäß einem der Ansprüche 1 bis 4, wobei die Maillard-Reaktionsprodukte aus Zucker und proteolytischen Produkten in dem Verfahren zur Herstellung eines fermentierten alkoholischen Getränks vor dem Fermentationsprozess zugegeben werden.

6. Verfahren zur Herstellung eines fermentierten alkoholischen Getränks gemäß einem der Ansprüche 1 bis 4, wobei ein Verfahren zur Herstellung von Maillard-Reaktionsprodukten aus Zucker und proteolytischen Produkten in den Bestandteilen unter Verwendung einer Reaktionstemperatur von nicht weniger als 105°C und nicht mehr als 121°C vor dem Fermentationsprozess in dem Verfahren zur Herstellung des fermentierten alkoholischen Getränks eingefügt wird.

7. Verfahren zur Herstellung eines fermentierten alkoholischen Getränks gemäß einem der Ansprüche 1 bis 6, wobei das fermentierte alkoholische Getränk ein Bier mit niedrigem Malzanteil oder andere verschiedene alkoholhaltige Getränke darstellt.

## Revendications

1. Procédé de production d'une boisson alcoolisée fermentée qui utilise la levure de bière, où des produits de la réaction de Maillard du sucre et des produits protéolytiques ou des préparations de ceux-ci sont utilisés pour ajuster la couleur de liquide et la saveur de la boisson alcoolisée fermentée.

2. Procédé de production d'une boisson alcoolisée fermentée selon la revendication 1, où les produits protéolytiques sont des produits de décomposition des protéines qui sont utilisés comme ingrédients d'azote dans la production de la boisson alcoolisée fermentée.

3. Procédé de production d'une boisson alcoolisée fermentée selon la revendication 1 ou 2, où les produits protéolytiques sont des produits protéolytiques de soja.

4. Procédé de production d'une boisson alcoolisée fermentée selon l'une des revendications 1-3, où la température de réaction pour la réaction de Maillard entre le sucre et les produits protéolytiques est de pas moins de 105°C et de pas plus de 121°C.

5. Procédé de production d'une boisson alcoolisée fermentée selon l'une des revendications 1-4, où les produits de la réaction de Maillard du sucre et des produits protéolytiques sont ajoutés avant le processus de fermentation dans le processus de production de la boisson alcoolisée fermentée.

6. Procédé de production d'une boisson alcoolisée fermentée selon l'une des revendications 1-4, où un processus de production des produits de la réaction de Maillard à partir du sucre et de produits protéolytiques dans les ingrédients en utilisant une température de réaction de pas moins de 105°C et de pas plus de 121°C est inséré avant le processus de fermentation dans le processus de production de la boisson alcoolisée fermentée,

7. Procédé de production d'une boisson alcoolisée fermentée selon l'une des revendications 1-6, où la boisson alcoolisée fermentée est une bière à faible teneur en malt ou autres spiritueux divers.
